(19) Europäisches Patentamt
European Patent Office
Office européen des brevets

(11) EP 3 290 201 A1

(12) # EUROPEAN PATENT APPLICATION

(43) Date of publication:
**07.03.2018 Bulletin 2018/10**

(21) Application number: **17001278.5**

(22) Date of filing: **25.07.2017**

(51) Int Cl.:
***B32B 15/08*** (2006.01) ***B32B 27/12*** (2006.01)
***B32B 27/28*** (2006.01) ***C09D 183/04*** (2006.01)
***C08G 77/12*** (2006.01) ***C08G 77/20*** (2006.01)
***C08L 83/04*** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **26.08.2016 JP 2016166027**

(71) Applicant: **Shin-Etsu Chemical Co., Ltd.**
**Chiyoda-ku,**
**Tokyo (JP)**

(72) Inventors:
- **Kimura, Saiko**
**Annaka-shi, Gunma-ken (JP)**
- **Hamamoto, Yoshihira**
**Annaka-shi, Gunma-ken (JP)**

(74) Representative: **Wibbelmann, Jobst**
**Wuesthoff & Wuesthoff**
**Patentanwälte PartG mbB**
**Schweigerstrasse 2**
**81541 München (DE)**

(54) **SILICON RESIN SUBSTRATE, METAL LAYER-FORMED SILICONE RESIN SUBSTRATE, CURED SILICONE RESIN SUBSTRATE, AND METAL LAYER-FORMED CURED-SILICONE RESIN SUBSTRATE**

(57) The present invention provides a silicone resin substrate, including quartz cloth and a silicone resin composition, wherein the silicone resin composition contains a silicon atom-bonded aryl group in an amount of 10% by moll or more and 99% by mol or less based on the whole silicon atom-bonded organic groups contained in the silicone resin composition. The present invention also provides a metal layer-formed silicone resin substrate, a cured silicone resin substrate, and a metal layer-formed cured-silicone resin substrate, using the silicone resin substrate. Each substrate excels in heat resistance and weather resistance as well as dielectric properties at high frequency.

EP 3 290 201 A1

## Description

### Technical Field

The present invention relates to a silicone resin substrate, a metal layer-formed silicone resin substrate, a cured silicone resin substrate, and a metal layer-formed cured-silicone resin substrate; particularly, a silicone resin substrate for high frequency, that is, radiofrequency.

### Background Art

With recent increase in capacity and speed of communication devices, excellent electric properties have been required of substrate materials used for the electronic parts composing the communication devices in order to cope with miniaturization, increase in density, and speedup. Dielectric loss due to the dielectric properties of substrate materials has been a main factor of degradation of electric signals in high frequency band of GHz order since the dielectric loss markedly increases as the frequency of the electric signal increases. To solve the problem, it has been required to develop a substrate material that has a lower dielectric constant and a lower dielectric loss tangent at high frequency. The frequency dependency of dielectric properties has been gaining attention, too, since the dielectric constant and the dielectric loss tangent tend to increase as the frequency increases.

In the previous print wiring substrates, epoxy resin has been used normally. The substrates of epoxy resin are low-priced and excellent in processability and plating properties, but have a problem that the dielectric properties are bad at high frequency. As the substrate material, fluororesin has been proposed too. Fluororesin is excellent in dielectric properties, but the processability and adhesion properties are poor, with the cost being very high, fluororesin has been used only for special uses.

Another resin with lower dielectric constant is polyphenylene ether resin. This is, however, a thermoplastic resin, thereby bringing bad processability and adhesion properties, together with lacking the reliability. Accordingly, modification of polyphenylene ether resin with epoxy resin or cyanate resin has been gaining attention (see Patent Literature 1). In synthesizing the modified polyphenylene ether resin, however, not a little polyphenylene ether resin with higher molecular weight remains to lower pot life of the varnish. The epoxy resin for modification has poor dielectric properties at high frequency and low heat resistance, thereby bringing a substrate material insufficient properties.

On the other hand, silicone resin is a substrate material with good heat resistance (see Patent Literature 2). However, no literature discloses the dielectric properties, particularly the dielectric properties at a high frequency band.

### Citation List

#### Patent Literature

Patent Document 1: Japanese Unexamined Patent Application Publication (Kokai) No. 2005-290124
Patent Document 2: Japanese Unexamined Patent Application Publication (Kokai) No. 2010-089493

### Summary of Invention

#### Technical Problem

The present invention has been accomplished in view of the foregoing circumstances. It is an object of the present invention to provide a silicone resin substrate that can give a substrate with good heat resistance and good weather resistance as well as excellent dielectric properties at high frequency; together with a metal layer-formed silicone resin substrate, a cured silicone resin substrate, and a metal layer-formed cured-silicone resin substrate, using the silicone resin substrate.

#### Solution to Problem

To solve the problem, the present invention provides a silicone resin substrate, comprising quartz cloth and a silicone resin composition,
wherein the silicone resin composition contains a silicon atom-bonded aryl group in an amount of 10% by mol or more and 99% by mol or less based on the whole silicon atom-bonded organic groups contained in the silicone resin composition.

Such a silicone resin substrate can be a substrate with good heat resistance and good weather resistance as well as excellent dielectric properties at high frequency.

It is preferable that the silicone resin composition contain:

(A) an organopolysiloxane shown by the following average composition formula (1) having two or more silicon atom-bonded alkenyl groups in one molecule,

$$(R^1_3SiO_{1/2})_a(R^1_2SiO_{2/2})_b(R^1_2SiO_{3/2})_c(SiO_{4/2})_d \qquad (1)$$

wherein $R^1$ independently represents a hydroxy group, a linear, branched, or cyclic alkyl group having 1 to 10 carbon atoms, an aryl group having 6 to 10 carbon atoms, or an alkenyl group having 2 to 10 carbon atoms; and "a", "b", "c", and "d" are numbers satisfying $a \geq 0$, $b \geq 0$, $c \geq 0$, $d \geq 0$, and $a+b+c+d = 1$;

(B) an organohydrogenpolysiloxane shown by the following average composition formula (2) having two or more silicon atom-bonded hydrogen atoms in one molecule, with the silicon atom-bonded hydrogen atoms in the component (B) being in an amount of 0.1 to 5.0 mol per one mol of the silicon atom-bonded alkenyl group in the component (A),

$$(R^2_3SiO_{1/2})_e(R^2_2SiO_{2/2})_f(R^2SiO_{3/2})_g(SiO_{4/2})_h \qquad (2)$$

wherein $R^2$ independently represents a hydrogen atom, a hydroxy group, a linear, branched, or cyclic alkyl group having 1 to 10 carbon atoms, or an aryl group having 6 to 10 carbon atoms; and "e", "f", "g", and "h" are numbers satisfying $e \geq 0$, $f \geq 0$, $g \geq 0$, $h \geq 0$, and $e+f+g+h = 1$; and

(C) an addition reaction catalyst.

The silicone resin substrate can be particularly excellent in heat resistance and weather resistance by using such a silicone resin composition and quartz cloth as a raw material of the silicone resin substrate.

It is also preferable that the silicone resin composition further contain

(D) filler in an amount of 1 parts by mass or more and 900 parts by mass or less based on total 100 parts by mass of the component (A) and the component (B).

Such a silicone resin composition can give a silicone resin substrate with improved mechanical strength. The dielectric properties can also be adjusted in accordance with needs.

The silicone resin substrate is preferably any of the quartz cloth impregnated with the silicone resin composition, a molded material of the silicone resin composition and the quartz cloth, and a laminate in which the silicone resin composition is laminated on the quartz cloth.

Such silicone resin substrates can be manufactured easily, and the thickness can be adjusted appropriately.

The present invention also provides a metal layer-formed silicone resin substrate, comprising a metal layer formed on one surface or both surfaces of the foregoing silicone resin substrate.

Such a silicone resin substrate having a metal layer formed thereon can be more suitable as a substrate for a semiconductor device.

The present invention also provides a cured silicone resin substrate, comprising cured material of the foregoing silicone resin substrate.

The inventive silicone resin substrate can be cured to be a cured silicone resin substrate with good heat resistance and good weather resistance as well as excellent dielectric properties at high frequency.

The present invention also provides a metal layer-formed cured-silicone resin substrate, comprising a metal layer formed on one surface or both surfaces of the foregoing cured silicone resin substrate.

Such a cured silicone resin substrate having a metal layer formed thereon can be more suitable as a substrate for a semiconductor device.

Advantageous Effects of Invention

As described above, the inventive silicone resin substrate can be a silicone resin substrate with excellent dielectric properties at high frequency. The inventive silicone resin substrate, comprising silicone resin, becomes excellent in both of heat resistance and weather resistance, too, compared to the previous substrate composed of epoxy resin. Accordingly, it is possible to obtain a highly reliable semiconductor device to cope with miniaturization, increase in density, and speedup by applying such a silicone resin substrate of the present invention, or a substrate obtained by using the silicone resin substrate including a metal layer-formed silicone resin substrate, a cured silicone resin substrate, and a metal layer-formed cured-silicone resin substrate, to a base material of the semiconductor device.

## Description of Embodiments

As described above, it has been required to develop a highly reliable substrate that has good dielectric properties at high frequency as well as excellent heat resistance and weather resistance.

The present inventors have diligently investigated to solve the foregoing subject. As a result, the inventors have found that the substrate comprising quartz cloth and a silicone resin composition with a prescribed amount of aryl group can be a highly reliable silicone resin substrate that has good dielectric properties at high frequency and excels in heat resistance and weather resistance; thereby completing the present invention.

That is, the present invention is a silicone resin substrate, comprising quartz cloth and a silicone resin composition,
wherein the silicone resin composition contains a silicon atom-bonded aryl group in an amount of 10% by mol or more and 99% by mol or less based on the whole silicon atom-bonded organic groups contained in the silicone resin composition.

Hereinafter, the present invention will be specifically described, but the present invention is not limited thereto. Incidentally, in this description, "Me" represents a methyl group, "Ph" represents a phenyl group, and "Vi" represents a vinyl group.

### (Silicone Resin Composition)

The inventive silicone resin substrate comprises a silicone resin composition that contains a silicon atom-bonded aryl group in an amount of 10% by mol or more and 99% by mol or less, preferably 15% by mol or more and 80% by mol or less, more preferably 17% by mol or more and 75% by mol or less based on the whole silicon atom-bonded organic groups. The silicone resin composition of the present invention preferably contains curable organopolysiloxane.

The silicone resin composition, with the aryl group content being prescribed in the foregoing range, can be a silicone resin composition the dielectric properties of which does not lower at high frequency, thereby giving a substrate that can be used at high frequency too. In a silicone resin substrate comprising a silicone resin composition that contains a silicon atom-bonded aryl group in an amount of less than 10% by mol based on the whole silicon atom-bonded organic groups, the dielectric properties are degraded depending on frequency. When the content of silicon atom-bonded aryl group is more than 99% by mol based on the whole silicon atom-bonded organic groups, the silicone resin composition gives too brittle molded material or cured material, which cannot function as a substrate.

The silicone resin composition in the present invention preferably contains

(A) an organopolysiloxane shown by the following average composition formula (1) having two or more silicon atom-bonded alkenyl groups in one molecule,

$$(R^1_3SiO_{1/2})_a(R^1_2SiO_{2/2})_b(R^1SiO_{3/2})_c(SiO_{4/2})_d \qquad (1)$$

wherein $R^1$ independently represents a group selected from a hydroxy group, a linear, branched, or cyclic alkyl group having 1 to 10 carbon atoms, an aryl group having 6 to 10 carbon atoms, and an alkenyl group having 2 to 10 carbon atoms; and "a", "b", "c", and "d" are numbers satisfying $a \geq 0$, $b \geq 0$, $c \geq 0$, $d \geq 0$, and $a+b+c+d = 1$;
(B) an organohydrogenpolysiloxane shown by the following average composition formula (2) having two or more silicon atom-bonded hydrogen atoms in one molecule, with the silicon atom-bonded hydrogen atoms in the component (B) being in an amount of 0.1 to 5.0 mol per one mol of the silicon atom-bonded alkenyl group in the component (A),

$$(R^2_3SiO_{1/2})_e(R^2_2SiO_{2/2})_f(R^2SiO_{3/2})_g(SiO_{4/2})_h \qquad (2)$$

wherein $R^2$ independently represents a hydrogen atom or a group selected from a hydroxy group, a linear, branched, or cyclic alkyl group having 1 to 10 carbon atoms, and an aryl group having 6 to 10 carbon atoms; and "e", "f", "g", and "h" are numbers satisfying $e \geq 0$, $f \geq 0$, $g \geq 0$, $h \geq 0$, and $e+f+g+h = 1$; and
(C) an addition reaction catalyst.

As described above, the inventive silicone resin substrate preferably comprises a silicone resin composition that contains the foregoing components (A) to (C). Hereinafter, such a silicone resin composition is specifically described on each component.

- (A) Organopolysiloxane -

The component (A), which is an important constituent of the suitable silicone resin composition to constitute the inventive silicone resin substrate, is an organopolysiloxane shown by the following average composition formula (1) having two or more silicon atom-bonded alkenyl groups in one molecule,

$$(R^1{}_3SiO_{1/2})_a(R^1{}_2SiO_{2/2})_b(R^1SiO_{3/2})_c(SiO_{4/2})_d \qquad (1)$$

wherein $R^1$ independently represents a hydroxy group, a linear, branched, or cyclic alkyl group having 1 to 10 carbon atoms, an aryl group having 6 to 10 carbon atoms, or an alkenyl group having 2 to 10 carbon atoms; and "a", "b", "c", and "d" are numbers satisfying $a \geq 0$, $b \geq 0$, $c \geq 0$, $d \geq 0$, and $a+b+c+d = 1$.

In the foregoing average composition formula (1), illustrative examples of $R^1$ include a hydroxy group; an alkyl group such as a methyl group, an ethyl group, a propyl group, a butyl group, and a cyclohexyl group; an aryl group such as a phenyl group, a benzyl group, and a phenethyl group; and an alkenyl group such as a vinyl group and an allyl group. Among them, a hydroxy group, a methyl group, a vinyl group, and a phenyl group are preferable.

Illustrative examples of the component (A) include the following organopolysiloxanes having the $(R^1{}_3SiO_{1/2})$ unit, the $(R^1{}_2SiO_{2/2})$ unit, and the $(R^1SiO_{3/2})$ unit:

$$(Me_2ViSiO_{1/2})_{a1}(Me_2SiO_{2/2})_{b1}(PhSiO_{3/2})_{c1}$$

$$(Me_2ViSiO_{1/2})_{a2}(MeViSiO_{2/2})_{b2}(PhSiO_{3/2})c2$$

$$(Me_2ViSiO_{1/2})_{a3}(MePhSiO_{2/2})_{b3}(PhSiO_{3/2})_{c3}$$

$$(Me_2ViSiO_{1/2})_{a4}(Ph_2SiO_{2/2})_{b4}(PhSiO_{3/2})_{c4}$$

$$(Me_2ViSiO_{1/2})_{a5}(Ph_2SiO_{2/2})_{b5}(MeSiO_{3/2})_{c5}$$

$$(Me_2ViSiO_{1/2})_{a6}(Me_2SiO_{2/2})_{b6}(MeViSiO_{2/2})_{b7}(PhSiO_{3/2})_{c6}$$

$$(MeVi_2SiO_{1/2})_{a7}(Me_2SiO_{2/2})_{b8}(PhSiO_{3/2})_{c7}$$

$$(MeVi_2SiO_{1/2})_{a8}(MePh_2SiO_{1/2})_{a9}(MePhSiO_{2/2})_{b9}(MeSiO_{3/2})_{c8}$$

wherein a1, a2, a3, a4, a5, a6, a7, a8, a9, b1, b2, b3, b4, b5, b6, b7, b8, b9, c1, c2, c3, c4, c5, c6, c7, and c8 are numbers satisfying $0.01 \leq a1 \leq 0.6$, $0.01 \leq a2 \leq 0.6$, $0.01 \leq a3 \leq 0.6$, $0.01 \leq a4 \leq 0.6$, $0.01 \leq a5 \leq 0.6$, $0.01 \leq a6 \leq 0.2$, $0.01 \leq a7 \leq 0.6$, $0.01 \leq a8 \leq 0.2$, $0.01 \leq a9 \leq 0.2$, $0.005 \leq b1 \leq 0.5$, $0.005 \leq b2 \leq 0.5$, $0.005 \leq b3 \leq 0.5$, $0.005 \leq b4 \leq 0.5$, $0.005 \leq b5 \leq 0.5$, $0.2 \leq b6 \leq 0.7$, $0. 01 \leq b7 \leq 0.2$, $0.005 \leq b8 \leq 0.5$, $0.4 \leq b9 \leq 0.9$, $0.24 \leq c1 \leq 0.9$, $0.24 \leq c2 \leq 0.9$, $0.24 \leq c3 \leq 0.9$, $0.24 \leq c4 \leq 0.9$, $0.24 \leq c5 \leq 0.9$, $0.2 \leq c6 \leq 0.7$, $0.24 \leq c7 \leq 0.9$, and $0.01 \leq c8 \leq 0.2$, as well as $a1+b1+c1 = 1$, $a2+b2+c2 = 1$, $a3+b3+c3 = 1$, $a4+b4+c4 = 1$, $a5+b5+c5 = 1$, $a6+b6+b7+c6 = 1$, $a7+b8+c7 = 1$, and $a8+a9+b9+c8 = 1$.

Illustrative examples of the component (A) also include the following organopolysiloxanes having the $(R^1{}_3SiO_{1/2})$ unit and the $(R^1SiO_{3/2})$ unit:

$$(Me_2ViSiO_{1/2})_{a10}(PhSiO_{3/2})_{c9}$$

$$(MeVi_2SiO_{1/2})_{a11}(PhSiO_{3/2})_{c10}$$

$$(Me_3SiO_{1/2})_{a12}(Me_2ViSiO_{1/2})_{a13}(PhSiO_{3/2})_{c11}$$

$$(Me_3SiO_{1/2})_{a14}(MePhViSiO_{1/2})_{a15}(PhSiO_{3/2})_{c12}$$

$$(Me_2ViSiO_{1/2})_{a16}(MeSiO_{3/2})_{c13}$$

wherein a10, a11, a12, a13, a14, a15, a16, c9, c10, c11, c12, and c13 are numbers satisfying $0.05 \leq a10 \leq 0.5$, $0.05 \leq a11 \leq 0.5$, $0.025 \leq a12 \leq 0.475$, $0.025 \leq a13 \leq 0.475$, $0.025 \leq a14 \leq 0.475$, $0.025 \leq a15 \leq 0.475$, $0.01 \leq a16 \leq 0.5$, $0.5 \leq c9 \leq 0.95$, $0.5 \leq c10 \leq 0.95$, $0.5 \leq c11 \leq 0.95$, $0.5 \leq c12 \leq 0.95$, and $0.5 \leq c13 \leq 0.99$, as well as $a10+c9 = 1$, $a11+c10 = 1$, $a12+a13+c11 = 1$, $a14+a15+c12 = 1$, $a16+c13 = 1$.

Illustrative examples of the component (A) also include the following organopolysiloxanes having the $(R^1SiO_{3/2})$

unit alone:

$$(PhSiO_{3/2})_{c14}(ViSiO_{3/2})_{c15}$$

$$(MeSiO_{3/2})_{c16}(ViSiO_{3/2})_{c17}$$

wherein c14, c15, c16, and c17 are numbers satisfying $0.5 \le c14 \le 0.95$, $0.05 \le c15 \le 0.5$, $0.5 \le c16 \le 0.98$, and $0.02 \le c17 \le 0.5$, as well as $c14+c15 = 1$ and $c16+c17 = 1$.

Illustrative examples of the component (A) also include the following organopolysiloxanes having the $(R^1{}_3SiO_{1/2})$ unit, the $(R^1{}_2SiO_{2/2})$ unit, and the $(SiO_{4/2})$ unit:

$$(Me_2ViSiO_{1/2})_{a17}(Ph_2SiO_{2/2})_{b10}(SiO_{4/2})_{d1}$$

$$(Me_3SiO_{1/2})_{a18}(Me_2ViSiO_{1/2})_{a19}(MePhSiO_{2/2})_{b11}(MeViSiO_{2/2})_{b12}(Ph_2SiO_{2/2})_{b13}(SiO_{4/2})_{d2}$$

wherein a17, a18, a19, b10 b11, b12, b13, d1, and d2 are numbers satisfying $0.1 \le a17 \le 0.7$, $0.02 \le a18 \le 0.3$, $0.05 \le a19 \le 0.4$, $0.1 \le b10 \le 0.2$, $0.02 \le b11 \le 0.3$, $0.005 \le b12 \le 0.1$, $0.1 \le b13 \le 0.5$, $0.1 \le d1 \le 0.7$, and $0.1 \le d2 \le 0.6$, as well as $a17+b10+d1 = 1$ and $a18+a19+b11+b12+b13+d2 = 1$.

Illustrative examples of the component (A) also include the following organopolysiloxanes having the $(R^1{}_3SiO_{1/2})$ unit and the $(SiO_{4/2})$ unit:

$$(Me_2ViSiO_{1/2})_{a20}(SiO_{4/2})_{d3}$$

$$(Me_3SiO_{1/2})_{a21}(Me_2ViSiO_{1/2})_{a22}(SiO_{4/2})_{d4}$$

$$(Me_3SiO_{1/2})_{a23}(MePhViSiO_{1/2})_{a24}(SiO_{4/2})_{d5}$$

wherein a20, a21, a22, a23, a24, d3, d4, and d5 are numbers satisfying $0.01 \le a20 \le 0.5$, $0.1 \le a21 \le 0.5$, $0.05 \le a22 \le 0.3$, $0.1 \le a23 \le 0.5$, $0.05 \le a24 \le 0.3$, $0.5 \le d3 \le 0.99$, $0.3 \le d4 \le 0.85$, and $0.3 \le d5 \le 0.85$, as well as $a20+d3 = 1$, $a21+a22+d4 = 1$, and $a23+a24+d5 = 1$.

Illustrative examples of the component (A) also include the following organopolysiloxanes having the $(R^1{}_3SiO_{1/2})$ unit and the $(R^1{}_2SiO_{2/2})$ unit:

$$(Me_2ViSiO_{1/2})_{a25}(Me_2SiO_{2/2})_{b14}$$

$$(Me_2ViSiO_{1/2})_{a26}(Ph_2SiO_{2/2})_{b15}$$

$$(MePhViSiO_{1/2})_{a27}(Me_2SiO_{2/2})_{b16}$$

$$(MePhViSiO_{1/2})_{a28}(Ph_2SiO_{2/2})_{b17}$$

$$(Me_2ViSiO_{1/2})_{a29}(Me_2SiO_{2/2})_{b18}(Ph_2SiO_{2/2})_{b19}$$

$$(Me_2ViSiO_{1/2})_{a30}(MePhSiO_{2/2})_{b20}(Ph_2SiO_{2/2})_{b21}$$

wherein a25, a26, a27, a28, a29, a30, b14, b15, b16, b17, b18, b19, b20, and b21 are numbers satisfying $0.01 \le a25 \le 0.6$, $0.01 \le a26 \le 0.6$, $0.001 \le a27 \le 0.6$, $0.01 \le a28 \le 0.6$, $0.01 \le a29 \le 0.3$, $0.05 \le a30 \le 0.4$, $0.4 \le b14 \le 0.99$, $0.4 \le b15 \le 0.99$, $0.4 \le b16 \le 0.999$, $0.4 \le b17 \le 0.99$, $0.3 \le b18 \le 0.89$, $0.1 \le b19 \le 0.5$, $0.1 \le b20 \le 0.7$, and $0.1 \le b21 \le 0.7$, as well as $a25+b14 = 1$, $a26+b15 = 1$, $a27+b16 = 1$, $a28+b17 = 1$, $a29+b18+b19 = 1$, and $a30+b20+b21 = 1$.

It is to be noted that the ratio of the silicon atom-bonded aryl group can be adjusted to a desired range in the curable organopolysiloxane contained in the silicone resin composition by adjusting each content of the $(PhSiO_{3/2})$ unit, the $(Ph_2SiO_{2/2})$ unit, the $(MePhSiO_{2/2})$ unit, and the $(MePhViSiO_{1/2})$ unit described above, for example.

The organopolysiloxane of the component (A) is not limited to the foregoing specific examples. The foregoing organopolysiloxane can be used singly or in combination of two or more kinds as the component (A).

As the component (A), it is preferable to use at least one organopolysiloxane that contains the $(Ph_2SiO_{2/2})$ unit and/or $(MePhSiO_{2/2})$ unit. By using organopolysiloxane that contains the foregoing unit(s), the dielectric properties of the silicone resin composition can be more favorable at high frequency.

The weight-average molecular weight of the component (A) is preferably in a range of 1,000 to 1,000,000 in

terms of polystyrene.

The organopolysiloxane of the component (A) can be synthesized by combining compounds of raw material for each unit in such a way that each siloxane unit constitutes a prescribed molar ratio in the product polymer, followed by performing co-hydrolysis condensation in the presence of an acid, for example.

Illustrative examples of the raw material of each siloxane unit include chlorosilanes corresponding to each siloxane unit; and alkoxysilanes such as methoxysilanes, corresponding to each of these chlorosilanes.

- (B) Organohydrogenpolysiloxane -

The component (B), which is an important constituent of the suitable silicone resin composition to constitute the inventive silicone resin substrate, is an organohydrogenpolysiloxane shown by the following average composition formula (2) having two or more silicon atom-bonded hydrogen atoms in one molecule to function as a crosslinking agent of the component (A) described above,

$$(R^2{}_3SiO_{1/2})_e(R^2{}_2SiO_{2/2})_f(R_2SiO_{3/2})_g(SiO_{4/2})_h \quad (2)$$

wherein $R^2$ independently represents a hydrogen atom, a hydroxy group, a linear, branched, or cyclic alkyl group having 1 to 10 carbon atoms, or an aryl group having 6 to 10 carbon atoms; and "e", "f", "g", and "h" are numbers satisfying $e \geq 0$, $f \geq 0$, $g \geq 0$, $h \geq 0$, and $e+f+g+h = 1$.

Illustrative examples of $R^2$ in the average composition formula (2) include a hydrogen atom; a hydroxy group; an alkyl group such as a methyl group, an ethyl group, a propyl group, a butyl group, and a cyclohexyl group; and an aryl group such as a phenyl group, a benzyl group, and a phenethyl group. Among them, a hydroxy group, a methyl group, and a phenyl group are preferable.

Illustrative examples of the component (B) include the following organohydrogenpolysiloxane:

$$(Me_2HSiO_{1/2})_{e1}(Me_2SiO_{2/2})_{f1}(PhSiO_{3/2})_{g1}$$

$$(Me_2HSiO_{1/2})_{e2}(Me_2SiO_{2/2})_{f2}(MeHSiO_{2/2})_{f3}(PhSiO_{3/2})_{g2}$$

$$(Me_2HSiO_{1/2})_{e3}(PhSiO_{3/2})_{g3}$$

$$(Me_2HSiO_{1/2})_{e4}(MeSiO_{3/2})_{g4}$$

$$(MeHSiO_{2/2})_{f4}(PhSiO_{3/2})_{g5}$$

$$(MeHSiO_{2/2})_{f5}(MeSiO_{3/2})_{g6}$$

$$(MeHSiO_{2/2})_{f6}(Me_2SiO_{2/2})_{f7}(PhSiO_{3/2})_{g7}$$

$$(Me_2HSiO_{1/2})_{e5}(Ph_2SiO_{2/2})_{f8}$$

$$(Me_2HSiO_{1/2})_{e6}(Me_2SiO_{2/2})_{f9}$$

$$(Me_3SiO_{1/2})_{e7}(MeHSiO_{2/2})_{f10}$$

$$(Me_3SiO_{1/2})_{e8}(MeHSiO_{2/2})_{f11}(Ph_2SiO_{2/2})_{f12}$$

$$(Me_3SiO_{1/2})_{e9}(MeHSiO_{2/2})_{f13}(Me_2SiO_{2/2})_{f14}$$

wherein e1, e2, e3, e4, e5, e6, e7, e8, e9, f1, f2, f3, f4, f5, f6, f7, f8, f9, f10, f11, f12, f13, f14, g1, g2, g3, g4, g5, g6, and g7 are numbers satisfying $0.01 \leq e1 \leq 0.5$, $0.01 \leq e2 \leq 0.5$, $0.3 \leq e3 \leq 0.9$, $0.01 \leq e4 \leq 0.9$, $0.3 \leq e5 \leq 0.9$, $0.05 \leq e6 \leq 0.7$, $0.1 \leq e7 \leq 0.7$, $0.01 \leq e8 \leq 0.2$, $0.01 \leq e9 \leq 0.3$, $0.09 \leq f1 \leq 0.75$, $0.045 \leq f2 \leq 0.7$, $0.045 \leq f3\ 0.7$, $0.05 \leq f4 \leq 0.5$, $0.05 \leq f5 \leq 0.5$, $0.01 \leq f6 \leq 0.2$, $0.2 \leq f7 \leq 0.8$, $0.1 \leq f8 \leq 0.7$, $0.3 \leq f9 \leq 0.95$, $0.3 \leq f10 \leq 0.9$, $0.3 \leq f11 \leq 0.9$, $0.05 \leq f12 \leq 0.5$, $0.1 \leq f13 \leq 0.6$, $0.3 \leq f14 \leq 0.8$, $0.24 \leq g1 \leq 0.9$, $0.24 \leq g2 \leq 0.9$, $0.1 \leq g3 \leq 0.7$, $0.1 \leq g4 \leq 0.99$, $0.5 \leq g5 \leq 0.95$, $0.5 \leq g6 \leq 0.95$, and $0.1 \leq g7 \leq 0.7$, as well as $e1+f1+g1 = 1$, $e2+f2+f3+g2 = 1$, $e3+g3 = 1$, $e4+g4 = 1$, $f4+g5 = 1$, $f5+g6 = 1$, $f6+f7+g7 = 1$, $e5+f8 = 1$, $e6+f9 = 1$, $e7+f10 = 1$, $e8+f11+f12 = 1$, and $e9+f13+f14 = 1$.

It is to be noted that the ratio of the silicon atom-bonded aryl group can be adjusted to a desired range in the curable organopolysiloxane contained in the silicone resin composition by adjusting each content of the $(PhSiO_{3/2})$ unit

and the ($Ph_2SiO_{2/2}$) unit described above, for example.

The organohydrogenpolysiloxane of the component (B) is not limited to the foregoing specific examples. The foregoing organohydrogenpolysiloxane can be used singly or in combination of two or more kinds as the component (B).

The formulation amount of the component (B) is such that the amount of the silicon atom-bonded hydrogen atom (SiH group) in the component (B) is 0.1 to 5.0 mol, preferably 0.1 to 4.0 mol, more preferably 0.5 to 3.0 mol, particularly 0.8 to 2.0 mol per one mol of the silicon atom-bonded alkenyl groups in the component (A). When the amount is 0.1 mol or more, it is possible to proceed the curing reaction sufficiently to give a cured product easily. When the amount is 5.0 mol or less, the cured product is free from a risk of leaving a large amount of unreacted SiH groups, and the properties of cured product can be unchanged over time thereby.

The weight-average molecular weight of the component (B) is preferably in a range of 1,000 to 1,000,000 in terms of polystyrene.

The organohydrogenpolysiloxane of the component (B) can be synthesized by combining compounds of raw material of each unit in such a way that each siloxane unit constitutes a prescribed molar ratio in the product polymer, followed by performing co-hydrolysis condensation in the presence of an acid, for example.

Illustrative examples of the raw material of each siloxane unit include chlorosilanes corresponding to each siloxane unit; and alkoxysilanes such as methoxysilanes, corresponding to each of these chlorosilanes.

- (C) Addition Reaction Catalyst -

The component (C) is an ingredient to be a catalyst for crosslinking by addition reaction of the silicon atom-bonded alkenyl groups of the component (A) and the silicon atom-bonded hydrogen atoms (SiH groups) of the component (B).

The catalyst that can be used as the component (C) may be any previously known one to promote the addition reaction. Illustrative examples of the component (C) include platinum group metal type catalysts, for example, platinum type catalysts such as platinum, platinum black, chloroplatinic acid including $H_2PtCl_6 \cdot kH_2O$, $K_2PtCl_6$, $KHPtCl_6 \cdot kH_2O$, $K_2PtCl_4$, $K_2PtCl_4 \cdot kH_2O$, $PtO_2 \cdot kH_2O$, $PtCl_4 \cdot kH_2O$, $PtCl_2$, $H_2PtCl_4 \cdot kH_2O$ (wherein "k" represents a positive integer), or a complex of the above with a hydrocarbon such as an olefin, an alcohol, or a vinyl group-containing organopolysiloxane; as well as palladium type catalysts and rhodium type catalysts in view of the cost and so on. Incidentally, the foregoing catalyst can be used singly or in combination of two or more kinds as the component (C).

The formulation amount of the component (C) may be an effective amount for curing, normally in the range of 0.1 to 500 ppm, particularly 0.5 to 100 ppm in terms of a mass of the platinum group metal based on the total amount of the component (A) and the component (B).

- (D) Filler -

The component (D) is filler, being a constituent that can be added to the silicone resin composition in order to improve the mechanical strength of the silicone resin substrate and to adjust the dielectric properties in accordance with needs.

The formulation amount of the component (D) is preferably 1 parts by mass or more and 900 parts by mass or less, more preferably 10 parts by mass or more and 700 parts by mass or less, particularly 50 parts by mass or more and 600 parts by mass or less based on the total 100 parts by mass of the component (A) and the component (B).

The component (D) is not particularly limited, and any previously known fillers can be used. Illustrative examples of the suitable component (D) include silica such as precipitated silica, fumed silica, fused silica, fused spherical silica, crystalline silica; silicon nitride, aluminum nitride, boron nitride, titanium dioxide, alumina, zinc oxide, magnesium oxide, antimony trioxide, calcium carbonate, calcium silicate, ferric oxide, carbon black, and polytetrafluoroethylene. Among them, fused silica, fused spherical silica, boron nitride, and polytetrafluoroethylene are particularly preferable. As the component (D), the foregoing (inorganic) filler can be used singly or in combination of two or more kinds.

The average particle size of the component (D) is not particularly limited, but preferably 0.001 to 50 $\mu$m; more preferably 0.01 to 30 $\mu$m, particularly 0.05 to 10 $\mu$m in view of the molding properties and the fluidity of the obtained silicone resin composition. Incidentally, the average particle diameter can be determined as a mass-average value $D_{50}$ (or a median diameter) in a particle size distribution measurement by a laser diffraction method. The shape of the component (D) is not particularly limited.

The filler of the component (D) may be previously subjected to surface treatment with a coupling agent such as a silane coupling agent and a titanate coupling agent to increase bond strength between the resin and the filler. Illustrative examples of the preferable coupling agent include epoxy functional alkoxysilanes such as $\gamma$-glycidoxypropyltrimethoxysilane, $\gamma$-glycidoxypropylmethyldiethoxysilane, and $\beta$-(3,4-epoxycyclohexyl)ethyltrimethoxysilane; amino functional alkoxysilanes such as N-($\beta$-aminoethyl)-$\gamma$-aminopropyltrimethoxysilane, $\gamma$-aminopropyltriethoxysilane, and N-phenyl-$\gamma$-aminopropyltrimethoxysilane; and mercapto functional alkoxysilanes such as $\gamma$-mercaptopropyltrimethoxysilane.

The formulation amount of the coupling agent used for the surface treatment and a method of the surface treatment are not particularly limited.

The filler of the component (D) may be added to the silicone resin composition in slurry in which the filler has been dispersed into an organic solvent.

- Other Components -

In the silicone resin composition, various types of additives can be formulated in accordance with needs, along with the components (A), (B), (C), and (D) described above. Any known ones can be used as the additives.

- Adhesion Assistant -

The silicone resin composition can contain an adhesion assistant (an adhesiveness provider) in accordance with needs to give adhesiveness. Illustrative examples of the adhesion assistant include a linear or cyclic organosiloxane oligomer that has 4 to 50 silicon atoms, preferably about 4 to 20 silicon atoms having at least two kinds, preferably two or three kinds, of functional groups selected from a silicon atom-bonded hydrogen atom (an SiH group), silicon atom-bonded alkenyl groups (e.g., an $Si\text{-}CH{=}CH_2$ group), alkoxysilyl groups (e.g., a trimethoxysilyl group), and epoxy groups (e.g., a glycidoxypropyl group, a 3,4-epoxycyclohexylethyl group) in one molecule; an organooxysilyl modified isocyanurate compound shown by the following formula (3), and the hydrolysis condensate thereof (organosiloxane modified isocyanurate compound). The adhesion assistants can be used singly or in combination of two or more kinds.

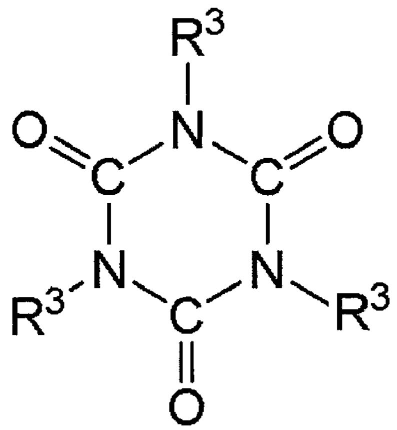

(3)

In the formula, $R^3$ is an organic group shown by the following formula (4) or a monovalent hydrocarbon group containing an aliphatic unsaturated bond, and one or more of $R^3$ is the organic group shown by the formula (4).

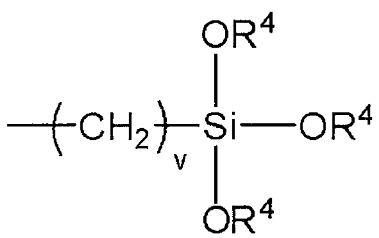

(4)

In the formula, $R^4$ is a hydrogen atom or a monovalent hydrocarbon group having 1 to 6 carbon atoms; "v" is an integer of 1 to 6, preferably 1 to 4.

Illustrative examples of the monovalent hydrocarbon group containing an aliphatic unsaturated bond of $R^3$ in the formula (3) include an alkenyl group having 2 to 8 carbon atoms, preferably 2 to 6 carbon atoms such as a vinyl group, an allyl group, a propenyl group, an isopropenyl group, a butenyl group, an isobutenyl group, a pentenyl group, and a hexenyl group; as well as a cycloalkenyl group having 6 to 8 carbon atoms such as a cyclohexenyl group.

Illustrative examples of the monovalent hydrocarbon group of $R^4$ in the formula (4) include a monovalent hydrocarbon group having 1 to 8 carbon atoms, particularly 1 to 6 carbon atoms such as an alkyl group including a methyl group, an ethyl group, a propyl group, an isopropyl group, a butyl group, an isobutyl group, a tert-butyl group, a pentyl group, and a hexyl group; a cycloalkyl group including a cyclohexyl group; the alkenyl groups and the cycloalkenyl

groups illustrated as the foregoing $R^3$; and an aryl group including a phenyl group. Among them, an alkyl group is preferable.

Illustrative examples of the adhesion assistant further include 1,5-bis(glycidoxypropyl)-1,3,5,7-tetramethylcyclotetrasiloxane, 1-glycydoxypropyl-5-trimethoxysilylethyl-1,3,5,7-tetramethylcyclotetrasiloxane, and the compounds shown by the following formulae.

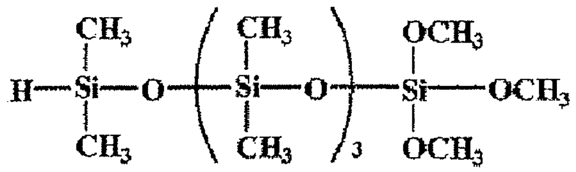

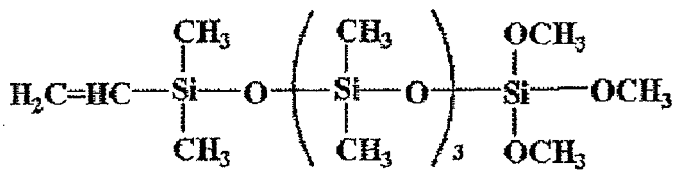

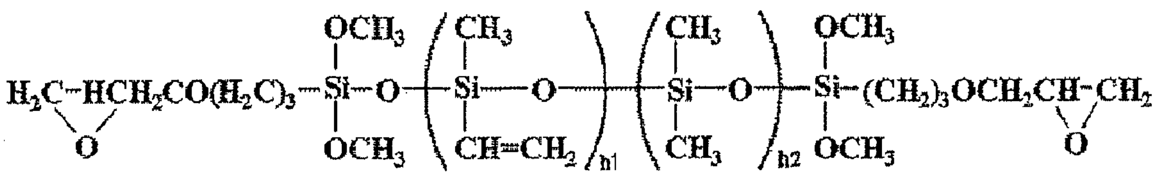

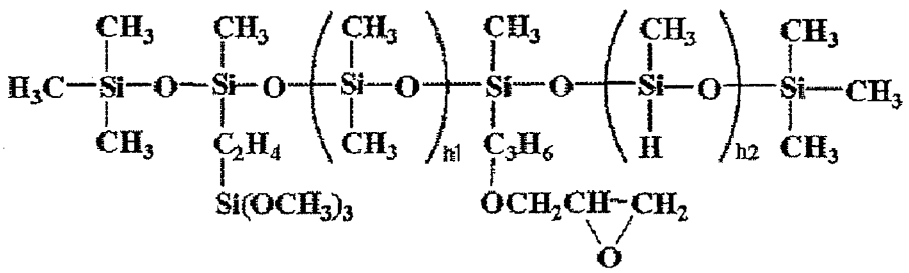

In the formulae, each h1 and h2 is an integer in a range of 0 to 50 satisfying that h1+h2 is 2 to 50, preferably 4 to 20.

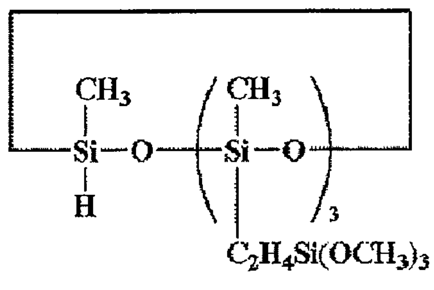

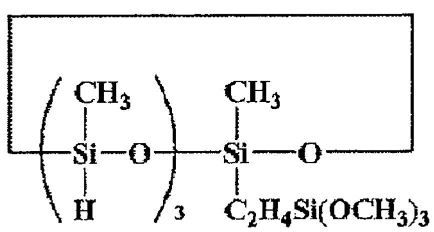

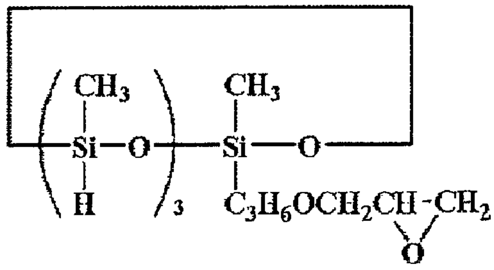

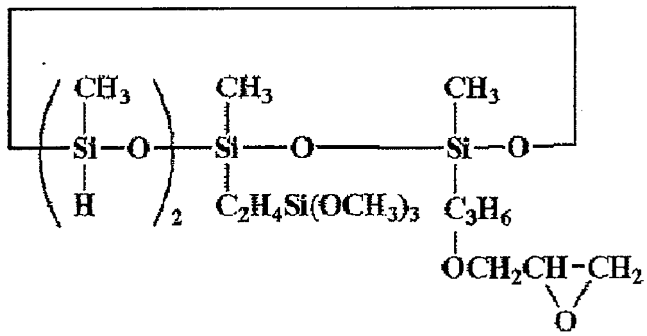

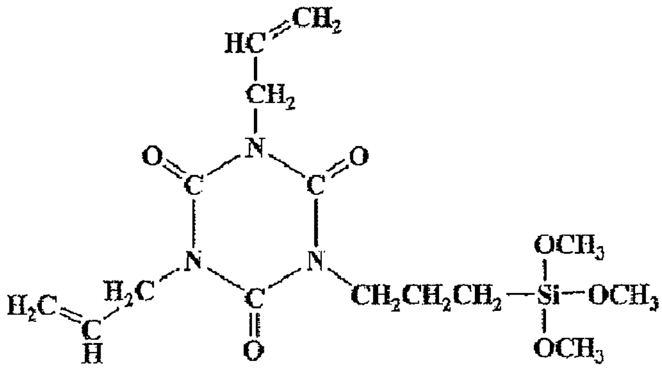

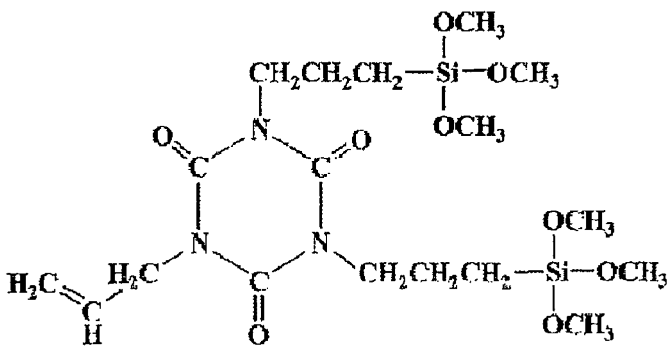

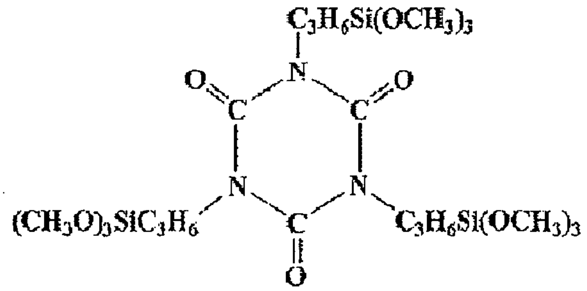

Among the foregoing adhesion assistants, the organosilicon compound having a silicon atom-bonded alkoxy group and an alkenyl group or a silicon atom-bonded hydrogen atom (a SiH group) in one molecule brings a cured product of the silicone resin composition with particularly favorable adhesion properties.
The formulation amount of the adhesion assistant is normally about 10 parts by mass or less (i.e., 0 to 10 parts by mass), preferably about 0.1 to 8 parts by mass, and more preferably about 0.2 to 5 parts by mass based on 100 parts by mass of the component (A). The adhesion assistant in amount of 10 parts by mass or less might not affect the hardness of the cured silicon resin composition nor increase the surface tackiness.

- Cure inhibitor -

The silicone resin composition can contain a cure inhibitor in accordance with needs. Illustrative examples of the cure inhibitor include an organopolysiloxane which contains vinyl groups in high content such as 1,3,5,7-tetramethyl-1,3,5,7-tetravinylcyclotetrasiloxane, triallylisocyanurate, alkylmaleate, acetylene alcohols; a silane modified compound thereof, a siloxane modified compound thereof; hydroperoxide, tetramethylethylenediamine, and benzotriazole. The cure inhibitor can be used singly or in combination of two or more kinds.
The formulation amount of the cure inhibitor is normally 0.001 to 1.0 parts by mass, and preferably 0.005 to 0.5 parts by mass based on 100 parts by mass of the component (A).

- Method for Preparing Silicone Resin Composition -

The silicone resin composition in the present invention can be prepared by mixing the prescribed components homogeneously. When preparing a silicone resin composition that contains the components (A) to (C), the composition is normally separated into two packages so as not to cure in storing, and the two packages of liquid are mixed to perform curing when using. The composition can be used as a one package composition by adding a small amount of cure inhibitor such as acetylene alcohol described above. The silicone resin composition can be obtained by mixing the components (A), (B), and (C) homogeneously to give a base composition; followed by adding component (D) and so on in accordance with needs. This base composition may be prepared as solution or dispersion by adding solvent in accordance with needs.
This solvent is not particularly limited, and any solvent that can dissolve or disperse the silicone resin composition may be used. Illustrative examples of such solvent include non-polar hydrocarbon solvent such as toluene, xylene, hexane, and heptane; and ethers. Among them, toluene and xylene are preferable.
The solvent may be added in any amount that can dissolve or disperse the silicone resin composition to impregnate glass cloth with the obtained solvent or dispersion. The amount is not particularly limited, but preferably 10 to 200 parts by mass, more preferably 20 to 100 parts by mass based on 100 parts by mass of the silicone resin composition.

(Quartz Cloth)

The quartz cloth, which is contained in the inventive silicone resin substrate and combined such as impregnated with the silicone resin composition, is not particularly limited, and any known one can be used. The quartz cloth is in a sheet-shape, and the thickness may be appropriately selected on the basis of the use of the inventive silicone resin substrate. The thickness is not particularly limited, but preferably 10 to 2,000 μm, more preferably 20 to 1,000 μm, particularly 50 to 300 μm. The silicone resin substrate can have excellent dielectric properties at high frequency by using quartz cloth.

(Silicone Resin Substrate)

As described above, the inventive silicone resin substrate is a silicone resin substrate comprising quartz cloth and a silicone resin composition, in which the silicone resin composition contains a silicon atom-bonded aryl group in an amount of 10% by mol or more and 99% by mol or less based on the whole silicon atom-bonded organic groups contained in the silicone resin composition.

Such a silicone resin substrate of the present invention may be any form, which is not particularly limited, including a composite in which the quartz cloth is impregnated with the silicone resin composition, a molded material of the silicone resin composition and the quartz cloth, and a laminate in which the silicone resin composition is laminated on the quartz cloth. Such a silicone resin substrate can be manufactured easily, and the thickness can be adjusted appropriately.

The present invention also provides a cured silicone resin substrate in which the inventive silicone resin substrate has been cured. Such a cured silicone resin substrate can be a substrate with good heat resistance and good weather resistance, having excellent dielectric properties at high frequency.

In these silicone resin substrate and cured silicone resin substrate of the present invention (hereinafter, they are also referred to as a (cured) silicone resin substrate in a lump), it is preferable that the dielectric loss tangent tan $\delta 1$ at the frequency of 1 GHz and the dielectric loss tangent tan $\delta 2$ at the frequency of 10 GHz satisfy the following Numerical Formula 1.

$$|\tan \delta 1 - \tan \delta 2| \leq X \quad \text{(Numerical Formula 1)}$$

Wherein X is 0 or more and 0.01 or less, preferably 0 or more and 0.008 or less, particularly 0 or more and 0.006 or less.

The obtained (cured) silicone resin substrate, satisfying the numerical formula, shows excellent dielectric properties at high frequency with the frequency dependency of dielectric properties being small.

The inventive (cured) silicone resin substrate preferably has a dielectric constant of 4.0 or less, more preferably 3.7 or less, particularly 3.5 or less at the frequency of 1 GHz. Such a (cured) silicone resin substrate can be applied as a substrate with excellent dielectric constant.

- Method for Manufacturing Silicone Resin Substrate -

The inventive silicone resin substrate can be manufactured by impregnating quartz cloth with the prepared silicone resin composition or molding them to form a sheet of (sheet-shaped) composite of the silicone resin composition and the quartz cloth. It is also possible to laminate a plurality sheet of the composites. After that, heat curing is preferably performed under pressure. The silicone resin substrate may also be manufactured by adhering (laminating) the quartz cloth and silicone resin composition that has been prepared into a sheet-shape previously, but the method is not limited to the specific examples. Then, the silicone resin substrate may be cured. The manufacture of a silicone resin substrate becomes convenient by using quartz cloth in sheet forming as described above.

The heat curing under pressure (curing by heat press molding) can be performed by using a heat press or a vacuum press, for example, preferably at a temperature of 50 to 200°C, more preferably 70 to 180°C under a pressure of 1 to 100 MPa, more preferably 5 to 50 MPa. The curing time is preferably 1 to 200 minutes, more preferably 2 to 120 minutes. Post-cure may be performed in accordance with needs.

The thickness of a cured material of the silicone resin composition to cover the surface of quartz cloth may be appropriately selected on the basis of the use of the inventive (cured) silicone resin substrate. The thickness is not particularly limited, but preferably 20 to 2,000 μm, particularly 50 to 1,000 μm.

When solvent is used for impregnating quartz cloth with the silicone resin composition or molding them as described above, it is preferable to remove the solvent from the quartz cloth by evaporation after the impregnating or the molding and before heat curing under pressure. The removal of solvent can be performed by leaving the quartz cloth impregnated or molded with the silicone resin composition that contains the solvent, preferably at 50 to 150°C, more preferably 60 to 100°C. It is also possible to use a heating apparatus such as an oven and a dryer appropriately.

The present invention also provides a metal layer-formed silicone resin substrate, comprising a metal layer(s) formed on one surface or both surfaces of the inventive silicone resin substrate; as well as a metal layer-formed cured-silicone resin substrate, comprising a metal layer(s) formed on one surface or both surfaces of the inventive cured silicone resin substrate. Having such a metal layer, they become more suitable as a semiconductor device or a package substrate.

The metal layer formed on the one surface or the both surfaces of the (cured) silicone resin substrate is not particularly limited. The layer preferably contains a metal selected from Ni, Cu, Fe, Co, or alloy composed of two or more

of these metals such as Ni-Cu alloy, Fe-Ni alloy, or Fe-Co alloy, for example.

The metal layer can be formed by a method subjecting a cured silicone resin substrate to various procedures such as a subtractive method, an electroless plating method, an electrolytic plating method, a physical vapor deposition method such as a vacuum deposition method and a sputtering method, a method of coating a coating composition containing metal filler, a method of dipping silicone resin substrate to this coating composition; and further including a method in which a metal foil(s) or a metal plate(s) is disposed on one or both of the surface(s) of a sheet-shape silicone resin composition before curing the silicone resin composition (the silicone resin substrate), followed by heat press molding of the silicone resin composition and the metal foil(s) or the metal plate(s) in a lump; but is not limited thereto. Such methods make it possible to easily manufacture a metal layer-formed (cured) silicone resin substrate in which the metal layer(s) is formed on one surface or the both surfaces thereof.

The obtained metal layer-formed (cured) silicone resin substrate may be subjected to patterning and metal plating on the outmost layer in accordance with needs. The metal plating can be performed by an ordinal method, and the method is not particularly limited. This metal layer formed by metal plating preferably contains a metal selected from Ni, Pd, Au, Ag, Sn, or alloys composed of two or more of these metals such as Ni-Au alloy, Ni-Ag alloy, or Ni-Pd-Au alloy, for example. It is also possible to perform electrolytic plating subsequent to electroless plating to increase the formed metal layer.

To the inventive (cured) silicone resin substrate, it is also possible to form a layer made of another component in accordance with needs.

In the present invention, it is also possible to form an adhesive layer composed of an adhesive resin composition between the (cured) silicone resin substrate and the metal layer, between the composites of the sheet-shape silicone resin composition and the quartz cloth, or the both of them. In this adhesive resin composition, thermosetting resin is preferably used. By using the (cured) silicone resin substrate, having such an adhesive layer formed thereon, a substrate with excellent heat resistance and discoloration resistance can be obtained since thermosetting resin is used as the adhesive layer.

The thermosetting resin used as the adhesive layer may be any known thermosetting resin that has adhesive properties. Illustrative examples thereof include silicone resin, epoxy resin, and phenol resin. Particularly, silicone resin and epoxy resin are preferable.

In the present invention, the adhesive properties between the (cured) silicone resin substrate and the adhesive layer may be further improved by subjecting either or both of the (cured) silicone resin substrate and the adhesive layer to treatment for improving the adhesion. Illustrative examples of the treatment for improving the adhesion include discharge treatment such as atmospheric plasma treatment, corona discharge treatment, and low temperature plasma treatment; treatment for surface swelling with alkali, desmearing treatment with permanganic acid, and primer treatment with a silane coupling agent.

As described above, the inventive silicone resin substrate can give a substrate with excellent dielectric properties at high frequency. The inventive silicone resin substrate, comprising a silicone resin, is excellent in heat resistance and weather resistance compared to previous substrates made from epoxy resin. Accordingly, a highly reliable semiconductor device can be obtained by applying the present invention to substrate material used for the electronic parts; which semiconductor device can cope with miniaturization, increase in density, and speedup by using the inventive silicone resin substrate, or substrate material using the silicone resin substrate such as a metal layer-formed silicone resin substrate, a cured silicone resin substrate, or a metal layer-formed cured-silicone resin substrate described above.

[Examples]

Hereinafter, the present invention will be specifically described by using Examples and Comparative Examples, but the present invention is not limited these Examples.

In Examples and Comparative Examples described below, the following organopolysiloxanes were used.

Organopolysiloxane (A-a):

| | |
|---|---|
| ($PhSiO_{3/2}$) unit: | 73.5 mol% |
| ($MeViSiO_{2/2}$) unit: | 1. 0 mol% |
| ($Me_2ViSiO_{1/2}$) unit: | 25.5 mol% |

Organopolysiloxane (A-b):

| | |
|---|---|
| ($PhSiO_{3/2}$) unit: | 4.7 mol% |
| ($PhMeSiO_{2/2}$) unit: | 88.4 mol% |

(continued)

| | |
|---|---|
| ($Me_2ViSiO_{1/2}$) unit: | 2.2 mol% |
| ($MePh_2SiO_{1/2}$) unit: | 4.7 mol% |

Organopolysiloxane (A-c):

| | |
|---|---|
| ($PhSiO_{3/2}$) unit: | 70.0 mol% |
| ($Me_2ViSiO_{1/2}$) unit: | 30.0 mol% |

Organopolysiloxane (A-d):

| | |
|---|---|
| ($Me_2SiO_{2/2}$) unit: | 68.0 mol% |
| ($Ph_2SiO_{2/2}$) unit: | 30.0 mol% |
| ($Me_2ViSiO_{1/2}$) unit: | 2.0 mol% |

Organopolysiloxane (A-e):

| | |
|---|---|
| ($SiO_{4/2}$) unit: | 29.7 mol% |
| ($MePhViSiO_{1/2}$) unit: | 13.1 mol% |
| ($Me_3SiO_{1/2}$) unit: | 57.2 mol% |

Organopolysiloxane (A-f):

| | |
|---|---|
| ($SiO_{4/2}$) unit: | 35.3 mol% |
| ($MePhSiO_{2/2}$) unit: | 8.1 mol% |
| ($MeViSi0_{2/2}$) unit: | 1.8 mol% |
| ($Ph_2SiO_{2/2}$) unit: | 26.5 mol% |
| ($Me_2ViSiO_{1/2}$) unit: | 17.7 mol% |
| ($Me_3SiO_{1/2}$) unit: | 10.6 mol% |

Organopolysiloxane (A-g):

| | |
|---|---|
| ($Ph_2SiO_{2/2}$ unit: | 92.6 mol% |
| ($Me_2ViSiO_{1/2}$) unit: | 7.4 mol% |

Organopolysiloxane (A-h):

| | |
|---|---|
| ($SiO_{4/2}$) unit: | 94.4 mol% |
| ($Me_2ViSiO_{1/2}$) unit: | 5.6 mol% |

Organopolysiloxane (A-i):

| | |
|---|---|
| ($Me_2SiO_{2/2}$) unit: | 99.5 mol% |
| ($Me_2ViSiO_{1/2}$) unit: | 0.5 mol% |

Organopolysiloxane (A-j):

| | |
|---|---|
| ($MeSiO_{3/2}$) unit: | 98.0 mol% |
| ($Me_2ViSiO_{1/2}$) unit: | 2.0 mol% |

In Examples and Comparative Examples described below, the following organohydrogenpolysiloxanes were

used.

Organohydrogenpolysiloxane (B-a):

| | |
|---|---|
| $(Ph_2SiO_{2/2})$ unit: | 33.3 mol% |
| $(Me_2HSiO_{1/2})$ unit: | 66.7 mol% |

Organohydrogenpolysiloxane (B-b):

| | |
|---|---|
| $(Ph_2SiO_{2/2})$ unit: | 50.0 mol% |
| $(Me_2HSiO_{1/2})$ unit: | 50.0 mol% |

Organohydrogenpolysiloxane (B-c):

| | |
|---|---|
| $(PhSiO_{3/2})$ unit: | 33.3 mol% |
| $(Me_2HSiO_{1/2})$ unit: | 66.7 mol% |

Organohydrogenpolysiloxane (B-d):

| | |
|---|---|
| $(Ph_2SiO_{2/2})$ unit: | 29.8 mol% |
| $(MeHSiO_{2/2})$ unit: | 66.7 mol% |
| $(Me_3SiO_{1/2})$ unit: | 3.5 mol% |

Organohydrogenpolysiloxane (B-e):

| | |
|---|---|
| $(MeHSiO_{2/2})$ unit: | 95.7 mol% |
| $(Me_3SiO_{1/2})$ unit: | 4.3 mol% |

Organohydrogenpolysiloxane (B-f):

| | |
|---|---|
| $(MeSiO_{3/2})$ unit: | 98.0 mol% |
| $(Me_2HSiO_{1/2})$ unit: | 2.0 mol% |

Organoladderpolysiloxane (C)

| | |
|---|---|
| $(PhSiO_{3/2})$ unit: | 99.9 mol% |
| $(Ph(OH)SiO_{2/2})$ unit: | 0.1 mol% |

(Example 1)

Curable organopolysiloxane (S1) was obtained by mixing 114.5 g of Organopolysiloxane (A-a), 45.8 g of Organopolysiloxane (A-b), and 39.7 g of Organohydrogenpolysiloxane (B-a) with well-stirring. In Curable organopolysiloxane (S1), the amount of silicon atom-bonded aryl group was 40 mol% based on the whole silicon atom-bonded organic groups. To this Curable organopolysiloxane (S1), 0.08 g of acetylene alcohol type ethynylmethyldecylcarbinol as a reaction inhibitor and 0.04 g of 1% by mass octyl alcohol solution of chloroplatinic acid were added, followed by well-stirring to prepare Silicone resin composition (X1).

A quartz glass cloth (manufactured by Shin-Etsu Quartz Products Co., Ltd.; thickness: 100 μm) was impregnated with the silicone resin composition to form a silicone resin substrate. This was press molded with a heating press at 160°C for 20 minutes, followed by at 200°C for 70 minutes to give Cured silicone resin substrate (F1).

(Example 2)

Curable organopolysiloxane (S2) was obtained by mixing 82.5 g of Organopolysiloxane (A-c), 73.4 g of Organopolysiloxane (A-d), 35.9 g of Organohydrogenpolysiloxane (B-b), and 8.2 g of Organohydrogenpolysiloxane (B-c) with

well-stirring. In Curable organopolysiloxane (S2), the amount of silicon atom-bonded aryl group was 35 mol% based on the whole silicon atom-bonded organic groups. Silicone resin composition (X2) was prepared in the same way as in Example 1 except for using Curable organopolysiloxane (S2) instead of Curable organopolysiloxane (S1). Cured silicone resin substrate (F2) was obtained in the same way as in Example 1 except for using Silicone resin composition (X2).

(Example 3)

Curable organopolysiloxane (S3) was obtained by mixing 126.0 g of Organopolysiloxane (A-d), 53.0 g of Organopolysiloxane (A-e), and 21.0 g of Organohydrogenpolysiloxane (B-d) with well-stirring. In Curable organopolysiloxane (S3), the amount of silicon atom-bonded aryl group was 23 mol% based on the whole silicon atom-bonded organic groups. Silicone resin composition (X3) was prepared in the same way as in Example 1 except for using Curable organopolysiloxane (S3) instead of Curable organopolysiloxane (S1). Cured silicone resin substrate (F3) was obtained in the same way as in Example 1 except for using Silicone resin composition (X3).

(Example 4)

Curable organopolysiloxane (S4) was obtained by mixing 108.7 g of Organopolysiloxane (A-f), 68.8 g of Organopolysiloxane (A-g), and 22.5 g of Organohydrogenpolysiloxane (B-b) with well-stirring. In Curable organopolysiloxane (S4), the amount of silicon atom-bonded aryl group was 40 mol% based on the whole silicon atom-bonded organic groups. To this Curable organopolysiloxane (S4), 0.08 g of acetylene alcohol type ethynylmethyldecylcarbinol as a reaction inhibitor and 0.04 g of 1% by mass octyl alcohol solution of chloroplatinic acid were added, followed by well-stirring to prepare a base composition. To this base composition, 290 g of toluene as solvent and 395 g of silica (trade name: ADMAFINE SO-E5, average particle size: about 1.5 μm, manufactured by Admatechs Co. Ltd.) were added, followed by stirring with a thinky mixer to prepare toluene dispersion of Silicone resin composition (X4). Cured silicone resin substrate (F4) was obtained in the same way as in Example 1 except for using Silicone resin composition (X4) instead of Silicone resin composition (X1).

(Example 5)

Curable organopolysiloxane (S5) was obtained by mixing 174.0 g of Organopolysiloxane (A-h) and 26.0 g of Organohydrogenpolysiloxane (B-a) with well-stirring. In Curable organopolysiloxane (S5), the amount of silicon atom-bonded aryl group was 11 mol% based on the whole silicon atom-bonded organic groups. Silicone resin composition (X5) was prepared in the same way as in Example 1 except for using Curable organopolysiloxane (S5) instead of Curable organopolysiloxane (S1). Cured silicone resin substrate (F5) was obtained in the same way as in Example 1 except for using Silicone resin composition (X5).

(Example 6)

Curable organopolysiloxane (S6) was obtained by mixing 181.3 g of Organopolysiloxane (A-g) and 18.7 g of Organohydrogenpolysiloxane (B-b) with well-stirring. In Curable organopolysiloxane (S6), the amount of silicon atom-bonded aryl group was 81 mol% based on the whole silicon atom-bonded organic groups. Silicone resin composition (X6) was prepared in the same way as in Example 1 except for using Curable organopolysiloxane (S6) instead of Curable organopolysiloxane (S1). Cured silicone resin substrate (F6) was obtained in the same way as in Example 1 except for using Silicone resin composition (X6).

(Comparative Example 1)

Curable organopolysiloxane (S7) was obtained by mixing 95.2 g of Organopolysiloxane (A-h), 95.2 g of Organopolysiloxane (A-i), and 9.6 g of Organohydrogenpolysiloxane (B-e) with well-stirring. In Curable organopolysiloxane (S7), the amount of silicon atom-bonded aryl group was 0 mol% based on the whole silicon atom-bonded organic groups. Silicone resin composition (X7) was prepared in the same way as in Example 1 except for using Curable organopolysiloxane (S7) instead of Curable organopolysiloxane (S1). Cured silicone resin substrate (F7) was obtained in the same way as in Example 1 except for using Silicone resin composition (X7).

(Comparative Example 2)

Curable organopolysiloxane (S8) was obtained by mixing 95 g of Organopolysiloxane (A-j) and 105 g of Organohydrogenpolysiloxane (B-f) with well-stirring. In Curable organopolysiloxane (S8), the amount of silicon atom-bonded

aryl group was 0 mol% based on the whole silicon atom-bonded organic groups. Silicone resin composition (X8) was prepared in the same way as in Example 1 except for using Curable organopolysiloxane (S8) instead of Curable organopolysiloxane (S1). Cured silicone resin substrate (F8) was obtained in the same way as in Example 1 except for using Silicone resin composition (X8).

(Comparative Example 3)

Curable organopolysiloxane (S9) was obtained by mixing 99.3 g of Organopolysiloxane (A-h), 59.9 g of Organopolysiloxane (A-i), 30.0 g of Organopolysiloxane (A-a), and 10.8 g of Organohydrogenpolysiloxane (B-e) with well-stirring. In Curable organopolysiloxane (S9), the amount of silicon atom-bonded aryl group was 7 mol% based on the whole silicon atom-bonded organic groups. Silicone resin composition (X9) was prepared in the same way as in Example 1 except for using Curable organopolysiloxane (S9) instead of Curable organopolysiloxane (S1). Cured silicone resin substrate (F9) was obtained in the same way as in Example 1 except for using Silicone resin composition (X9).

(Comparative Example 4)

A silicone resin substrate was tried to obtain by using Curable organopolysiloxane (S10), in which 200.0 g of Organoladderpolysiloxane (C) and 0.2 g of aluminum tris(acetylacetato) had been well stirred, but the cured material was too fragile to retain the shape when Silicone resin substrate (F10) was tried to produce after preparing the composition. The amount of silicon atom-bonded aryl group was 99.9 mol% based on the whole silicon atom-bonded organic groups.

1. Evaluation of Heat Discoloration Resistance

To check the heat resistance of the silicone resin compositions (X1 to X6) prepared in Examples as described above, each of the silicone resin composition (X1 to X6) was applied on a glass plate so as to have a thickness of 1 mm, followed by curing at 150°C for 4 hours. On the surface of the cured silicone resin obtained on the glass plate, light transmittance before heat treatment was measured at the average wavelength of blue LED (450 nm) with a spectrophotometer U-4100 (manufactured by Hitachi High-Technologies Corporation). Subsequently, heat treatment at 200°C for 100 hours was performed on the glass plate on which the cured silicone resin had been formed. The light transmittance after heat treatment was measured in the same way as that before the heat treatment. The results are shown in Table 1.

[Table 1]

| Silicone resin composition | | X1 | X2 | X3 | X4 | X5 | X6 |
|---|---|---|---|---|---|---|---|
| Light transmittance at wavelength of 450 nm (%) | Before heat treatment | 100 | 98 | 100 | 100 | 100 | 100 |
| | After heat treatment | 98 | 97 | 99 | 99 | 99 | 94 |

As shown in Table 1, every silicone resin composition (X1 to X6) was excellent in heat resistance.

On the cured silicone resin substrates obtained in Examples and Comparative Examples as described above, the following measurements (measurements of dielectric loss tangent and measurement of dielectric constant) were performed.

2. Measurement of Dielectric Loss Tangent

A network analyzer (E5063-2D5, manufactured by Keysight Technologies Inc.) and a strip line (manufactured by KEYCOM Corporation) were connected to measure dielectric loss tangent tan δ1 at the frequency of 1.0 GHz and the dielectric loss tangent tan δ2 at the frequency of 10 GHz of each cured silicone resin substrate, and the value of the numerical formula of $|\tan \delta 1 - \tan \delta 2|$ was calculated. The results are shown in Table 2 and Table 3 described below.

3. Measurement of Dielectric Constant

A network analyzer (E5063-2D5, manufactured by Keysight Technologies Inc.) and a strip line (manufactured by KEYCOM Corporation) were connected to measure dielectric constant at the frequency of 1.0 GHz of each cured silicone resin substrate. The results are shown in Table 2 and Table 3 described below.

[Table 2]

| | Examples | | | | | |
|---|---|---|---|---|---|---|
| | 1 | 2 | 3 | 4 | 5 | 6 |
| Curable organopolysiloxane | S1 | S2 | S3 | S4 | S5 | S6 |
| Amount of aryl group (mol%) based on the whole silicon atom-bonded organic groups in curable organopolysiloxane (S) | 40 | 35 | 23 | 40 | 11 | 81 |
| Cured silicone resin substrate | F1 | F2 | F3 | F4 | F5 | F6 |
| $\|\tan\delta 1 - \tan\delta 2\|$ | 0.0005 | 0.0010 | 0.0016 | 0.0014 | 0.0078 | 0.0026 |
| Dielectric constant at 1GHz | 2.9 | 3.2 | 3.1 | 3.0 | 3.4 | 2.8 |

[Table 3]

| | Comparative Examples | | | |
|---|---|---|---|---|
| | 1 | 2 | 3 | 4 |
| Curable organopolysiloxane | S7 | S8 | S9 | S10 |
| Amount of aryl group (mol%) based on the whole silicon atom-bonded organic groups in curable organopolysiloxane (S) | 0 | 0 | 7 | 99.9 |
| Cured silicone resin substrate | F7 | F8 | F9 | F10 |
| $\|\tan\delta 1 - \tan\delta 2\|$ | 0.013 | 0.012 | 0.012 | - |
| Dielectric constant at 1GHz | 3.9 | 3.1 | 3.7 | - |

As shown in Table 2, in Examples 1 to 6, using curable organopolysiloxane (S1, S2, S3, S4, S5, and S6) that contained silicon atom-bonded aryl group in an amount of 10% by mol or more and 99% by mol or less based on the whole silicon atom-bonded organic groups, each silicone resin substrate showed smaller $|\tan\delta 1 - \tan\delta 2|$ value, smaller frequency dependency of dielectric property, and better dielectric properties at high frequency compared to those of Comparative Examples. It was also found that the substrates showed low dielectric constant and excelled in both of dielectric loss tangent and dielectric constant.

On the other hand, in Comparative Examples 1 to 3, using curable organopolysiloxane (S7, S8, and S9) that contained silicon atom-bonded aryl group in an amount of smaller than 10% by mol based on the whole silicon atom-bonded organic groups, it was determined that the $|\tan\delta 1 - \tan\delta 2|$ values were larger, and the dielectric properties degraded depending on frequency as shown in Table 3. This reveals that the electric signals might be degraded at high frequency in Comparative Examples 1 to 3. In comparative Example 4, using curable organopolysiloxane (S10) that contained silicon atom-bonded aryl group in an amount of more than 99% by mol based on the whole silicon atom-bonded organic groups, the substrate itself could not be produced.

As described above, the present invention can provide a highly reliable silicone resin substrate with excellent dielectric properties at high frequency.

It is to be noted that the present invention is not restricted to the foregoing embodiment. The embodiment is just an exemplification, and any examples that have substantially the same feature and demonstrate the same functions and effects as those in the technical concept described in claims of the present invention are included in the technical scope of the present invention.

## Claims

**1.** A silicone resin substrate, comprising quartz cloth and a silicone resin composition,
wherein the silicone resin composition contains a silicon atom-bonded aryl group in an amount of 10% by mol or more and 99% by mol or less based on the whole silicon atom-bonded organic groups contained in the silicone resin composition.

**2.** The silicone resin substrate according to claim 1, wherein the silicone resin composition contains:

(A) an organopolysiloxane shown by the following average composition formula (1) having two or more silicon atom-bonded alkenyl groups in one molecule,

$$(R^1_3SiO_{1/2})_a(R^1_2SiO_{2/2})_b(R^1SiO_{3/2})_c(SiO_{4/2})_a \qquad (1)$$

wherein $R^1$ independently represents a hydroxy group, a linear, branched, or cyclic alkyl group having 1 to 10 carbon atoms, an aryl group having 6 to 10 carbon atoms, or an alkenyl group having 2 to 10 carbon atoms; and "a", "b", "c", and "d" are numbers satisfying $a \geq 0$, $b \geq 0$, $c \geq 0$, $d \geq 0$, and $a+b+c+d = 1$;

(B) an organohydrogenpolysiloxane shown by the following average composition formula (2) having two or more silicon atom-bonded hydrogen atoms in one molecule, with the silicon atom-bonded hydrogen atoms in the component (B) being in an amount of 0.1 to 5.0 mol per one mol of the silicon atom-bonded alkenyl group in the component (A),

$$(R^2_3SiO_{1/2})_e(R^2_2SiO_{2/2})_f(R^2SiO_{3/2})_g(SiO_{4/2})_h \qquad (2)$$

wherein $R^2$ independently represents a hydrogen atom, a hydroxy group, a linear, branched, or cyclic alkyl group having 1 to 10 carbon atoms, or an aryl group having 6 to 10 carbon atoms; and "e", "f", "g", and "h" are numbers satisfying $e \geq 0$, $f \geq 0$, $g \geq 0$, $h \geq 0$, and $e+f+g+h = 1$; and

(C) an addition reaction catalyst.

**3.** The silicone resin substrate according to claim 2, wherein the silicone resin composition further contains

(D) filler in an amount of 1 parts by mass or more and 900 parts by mass or less based on total 100 parts by mass of the component (A) and the component (B).

**4.** The silicone resin substrate according to any one of claims 1 to 3, wherein the silicone resin substrate is any of the quartz cloth impregnated with the silicone resin composition, a molded material of the silicone resin composition and the quartz cloth, and a laminate in which the silicone resin composition is laminated on the quartz cloth.

**5.** A metal layer-formed silicone resin substrate, comprising a metal layer formed on one surface or both surfaces of the silicone resin substrate according to any one of claims 1 to 4.

**6.** A cured silicone resin substrate, comprising cured material of the silicone resin substrate according to any one of claims 1 to 4.

**7.** A metal layer-formed cured-silicone resin substrate, comprising a metal layer formed on one surface or both surfaces of the cured silicone resin substrate according to claim 6.

Europäisches Patentamt
European Patent Office
Office européen des brevets

# EUROPEAN SEARCH REPORT

Application Number
EP 17 00 1278

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 2015/245476 A1 (AKAHANE SAIKO [JP] ET AL) 27 August 2015 (2015-08-27)<br>* page 2, paragraphs 26,35-36 *<br>* page 3, paragraph 49-56 *<br>* page 4, paragraph 79 *<br>* page 7, paragraph 116 *<br>* page 9, paragraphs 147-151,165-169 *<br>* page 20, paragraph 278-282 *<br>* example 6 and 15 *<br>----- | 1-7<br><br>5,7 | INV.<br>B32B15/08<br>B32B27/12<br>B32B27/28<br>C09D183/04<br>C08G77/12<br>C08G77/20<br>C08L83/04 |
| X | US 2014/120793 A1 (AKAHANE SAIKO [JP] ET AL) 1 May 2014 (2014-05-01)<br>* page 1, paragraph 10 *<br>* page 4, paragraph 64-65 *<br>* page 7, paragraph 100 - page 8, paragraph 102 *<br>* page 8, paragraph 107-108 *<br>* example 1 and 2 *<br>----- | 1-7 | |
| X<br><br><br>Y | WO 2006/088646 A1 (DOW CORNING [US]; DOW CORNING TORAY CO LTD [JP]; BAILEY DEBBIE [US]; K) 24 August 2006 (2006-08-24)<br>* page 1, paragraph 5 *<br>* page 5, paragraph 23 *<br>* page 10, paragraph 40 *<br>* page 31, paragraph 150 *<br>* examples 3, 6 and 7 *<br>----- | 1-4,6<br><br><br>5,7 | TECHNICAL FIELDS SEARCHED (IPC)<br>H05K<br>C03C<br>C08L<br>C08G<br>C08K<br>H01L<br>B32B<br>C09D |
| Y | WO 2016/101588 A1 (SHENGYI TECHNOLOGY CO LTD [CN]) 30 June 2016 (2016-06-30)<br>* abstract *<br>& EP 3 239 246 A1 (SHENGYI TECHNOLOGY CO LTD [CN]) 1 November 2017 (2017-11-01)<br>* page 2, paragraph 5-6 *<br>* page 4, paragraph 33-35 *<br>* example 1 *<br>----- | 5,7 | |

The present search report has been drawn up for all claims

1

| Place of search | Date of completion of the search | Examiner |
|---|---|---|
| The Hague | 24 January 2018 | Denis, Cécile |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 17 00 1278

This annex lists the patent family members relating to the patent documents cited in the above-mentioned European search report. The members are as contained in the European Patent Office EDP file on
The European Patent Office is in no way liable for these particulars which are merely given for the purpose of information.

24-01-2018

| Patent document cited in search report | Publication date | Patent family member(s) | Publication date |
|---|---|---|---|
| US 2015245476 A1 | 27-08-2015 | CN 104875443 A | 02-09-2015 |
| | | US 2015245476 A1 | 27-08-2015 |
| US 2014120793 A1 | 01-05-2014 | CN 103788658 A | 14-05-2014 |
| | | JP 5851970 B2 | 03-02-2016 |
| | | JP 2014088459 A | 15-05-2014 |
| | | KR 20140056029 A | 09-05-2014 |
| | | US 2014120793 A1 | 01-05-2014 |
| WO 2006088646 A1 | 24-08-2006 | AT 528355 T | 15-10-2011 |
| | | CN 101120053 A | 06-02-2008 |
| | | EP 1856206 A1 | 21-11-2007 |
| | | ES 2375370 T3 | 29-02-2012 |
| | | JP 5184098 B2 | 17-04-2013 |
| | | JP 2008530340 A | 07-08-2008 |
| | | KR 20070106723 A | 05-11-2007 |
| | | WO 2006088646 A1 | 24-08-2006 |
| WO 2016101588 A1 | 30-06-2016 | CN 105778515 A | 20-07-2016 |
| | | EP 3239246 A1 | 01-11-2017 |
| | | KR 20170100008 A | 01-09-2017 |
| | | TW 201623454 A | 01-07-2016 |
| | | US 2017354032 A1 | 07-12-2017 |
| | | WO 2016101588 A1 | 30-06-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005290124 A
- JP 2010089493 A